**Europäisches Patentamt**

(19) **European Patent Office**

**Office européen des brevets**

(11) **EP 0 649 599 B1**

(12) **EUROPEAN PATENT SPECIFICATION**

(45) Date of publication and mention
of the grant of the patent:
**14.04.1999 Bulletin 1999/15**

(51) Int. Cl.⁶: **A23L 1/035**, A23C 9/154,
A23L 1/0526

(21) Application number: **93402613.9**

(22) Date of filing: **25.10.1993**

(54) **Stabilizer composition enabling the production of a pourable aerated dairy dessert**

Stabilisierungszusammensetzung zur Herstellung eines zähflussigen lufthaltigen Milchdessert

Composition stabilisante permettant de produire un dessert laitier aéré versable

(84) Designated Contracting States:
**BE DE DK FR GB IE LU NL**

(43) Date of publication of application:
**26.04.1995 Bulletin 1995/17**

(73) Proprietor: **SKW BIOSYSTEMS**
**75008 Paris (FR)**

(72) Inventor: **Tilly, Gérard**
**F-50500 Carentan (FR)**

(74) Representative:
**Polus, Camille et al**
**c/o Cabinet Lavoix**
**2, Place d'Estienne d'Orves**
**75441 Paris Cedex 09 (FR)**

(56) References cited:
**EP-A- 0 238 330       EP-A- 0 441 495**
**US-A- 3 887 715       US-A- 4 178 390**
**US-A- 4 251 560       US-A- 4 400 406**
**US-A- 4 539 215**

## Description

The present invention relates to the use of a stabilizer composition for preparing an aerated dairy dessert.

More exactly, this invention is related to a dessert in the form of a pourable mousse, although stable for a few weeks, which is preferably consumed cold, at the temperature of the refrigerator, but not frozen.

Shaken ice milks are known, namely of the milkshake type, which are beverages with overrun and are consumed iced, at slightly negative (C°) temperatures. These drinks are prepared either traditionally by crushing and whipping ice cream in milk, or industrially by means of a machine which aerates and cools such a mixture optionally added with flavours and gelling and thickening agents such as carrageenan. However these are liquid desserts, having a relatively low overrun (30 to 70 %) and above all they are little stable in time.

US 4 959 227 pertains to a balanced liquid meal comprising from 70 to 90% by weight of skim milk. Such meals am for instance complete liquid milk ice cream, yogurt, cottage, cheese, butter milk milkshakes, soft serves, ice milk, sherbert which all have a low overrun ranging from 30 to 70%. A stabiliser containing 60% mono- & diglycercides, carboxymethylcellulose, guar gum, locust bean and carrageenan has been used in a low fat shake base.

On the other hand there are known milk-based mousses, namely whipped cream, bavarois and industrial chocolate mousses, which have high overrun, but are essentially solid and consequently cannot be poured.

The object of the present invention, is to provide a process enabling the preparation of an aerated dairy dessert, having high overrun while being pourable and stable.

More precisely, the subject matter of the invention is the use of a stabilizer composition comprising:

- 10 to 30% by weight of guar gum;
- 5 to 20% by weight of carrageenan and/or xanthan gum; and
- 60 to 80% by weight of an emulsifier selected from mono- and diglycerides of fatty acids, lactic or citric acid esters of mono- and diglycerides of fatty acids, sorbitan mono- or tristearate and lecithins, for the production of a pourable aerated dairy dessert in the form of a foam, having an overrun of 75 to 150% and a shelf life of at least three weeks without significant sagging or demixing, it being understood that the overrun is given by the following formula :

$$OR = \frac{W_1 - W_2}{W_2} \times 100$$

in which $W_1$ is the weight of a volume of unwhipped dessert and $W_2$ is the weight of the same volume of whipped dessert.

The guar gum, obtained by extracting ground guar seeds, is that generally used in food industry.

Similarly, carrageenan (either iota-, kappa-, lambda-carrageenan or their mixtures) and xanthan gum used in this composition, are fit for comsumption. However lambda-carrageenan based products in mixture with or without xanthan gum are preferred.

The emulsifier used in the composition is selected in a group of products widely used in food industry and compatible with the other components while maintainting the stability of the aerated dessert. Although it is not compulsory for obtaining a convenient product, it is preferred to use 65 to 70 % by weight of emulsifier, advantageously a lactic acid ester of mono- and diglycerides of fatty acids, particularly with a majority of monoglyceride. By "fatty acid" those are understood which are authorized in food industry, such as oleic acid, palmitic acid, etc....

The above-defined stabilizer composition is in particular useful for the preparation of a pourable, aerated dairy dessert, in the form of a foam, having an overrun of 75 to 150% preferably, comprising 0 to 20% by weight of fat, 0 to 3% by weight of starch and 0.4 to 0.8% by weight of the stabilizer composition.

Usually the aerated dessert obtained according to the invention will essentially be prepared with whole milk or partially or totally skimmed milk and/or milk powder and cream, and may comprise 1 to 10 % fat.

The stabilizer composition will be used in a proportion from 0.4 to 0.8 %, particularly 0.5 to 0.7 % by weight of the aerated dessert although higher proportions may give the desired result.

Of course, the aerated dessert also contains sugar (for example about 10 % by weight) and/or articifial sweeteners, and may contain flavours (coffee, caramel, chocolate, etc...), and buffers (phosphates, etc..).

The aerated dessert may be prepared by convention means, namely with whipping machines (shaking/aerating machines) used for preparing chocolate mousses, milk-shakes, etc... It may be stored several weeks preferably at the temperature of the refrigerator.

The following examples illustrate the invention.

## Example 1

A stabilizer composition was prepared by mixing 65 % by weight of lactic acid ester of mono- and diglycerides of fatty acids (E 472 b), 20 % by weight of guar gum (E 412) and 15 % by weight of carrageenan (E 407).

A solid premix comprising 2 parts (by weight) of starch, 7.5 parts of sugar, 0.40 part of vanilla flavour and 0.62 part of the above stabilizer composition has been dispersed in 89,5 parts (by weight) of 3 % fat milk.

Then the mixture has been pasteurized at 90°C, homogenized at 150 bars, sterilized at 130°C for 15 s., then cooled to 5°C and kept for a night. This mixture has been aerated in a Mondomix [R] continuous whipping machine (inlet set at 7 bars, 350 rpm, and the mixer to 3 bars, 700 rpm) to obtain a dessert having an overrun of 100 %.

The aerated dessert thus obtained was appetizing both in appearance and taste and could be stored for 3 weeks at a temperature below 10 °C without any substantial sagging or demixing.

When 125 ml of dessert has been introduced in a 167 ml beaker (height 60 mm, upper diameter 70 mm, lower diameter 50 mm) which was tilted horizontal, the dessert has flown from the beaker within 15 s.

## Example 2

The preparation has been carried out as in Example 1, except that 0.65 part by weight of a stabilizer composition consisting of 65 % by weight of the same emulsifier, 20 % by weight of guar gum, 10 % by weight of xanthan gum and 5 % by weight of carrageenan E 407 was used.

The dessert obtained had the same appearance as in the foregoing Example, and an overrun of 100 %.

## Example 3

The preparation has been carried out as in Example 1, except that 0.58 part by weight of a stabilizer composition consisting of 70 % by weight of the same emulsifier, 18 % by weight of guar gum and 12 % by weight of xanthan gum was used and dispersed (with the starch, sugar and flavour) in 90 parts by weight of milk completed to 10 % fat with cream.

An aerated dessert having good stability in time was obtained.

0.55 part by weight of the same stabilizer composition as above was used for preparing an aerated dessert with 80 parts by weight of milk completed to 10 % fat, 2 parts of starch, 17.5 parts of sugar and 0.40 part of vanilla flavour, which could be stored for 1 month in the refrigerator at 5°C without sagging.

## Claims

1. Use of a stabilizer composition comprising:

   - 10 to 30% by weight of guar gum;
   - 5 to 20% by weight of carrageenan and/or xanthan gum; and
   - 60 to 80% by weight of an emulsifier selected from mono- and diglycerides of fatty acids, lactic or citric acid esters of mono- and diglycerides of fatty acids, sorbitan mono- or tristearate and lecithins, for the production of a pourable aerated dairy dessert in the form of a foam, having an overrun of 75 to 150% and a shelf life of at least three weeks without significant sagging or demixing, it being understood that the overrun is given by the following formula :

$$OR = \frac{W_1 - W_2}{W_2} \times 100$$

in which $W_1$ is the weight of a volume of unwhipped dessert and $W_2$ is the weight of the same volume of whipped dessert.

2. Use according to claim 1, characterized in that the stabilizer composition comprises 65-70% by weight of emulsifier.

3. Use according to any of the preceding claims characterized in that the emulsifier is lactic acid ester of mono- and/or diglyceride(s) of fatty acids.

4. Use according to any of the preceding claims characterized in that from 0.4 to 0.8% by weight of the stabilizer composition is incorporated into the dairy dessert.

5. Use according to any of the preceding claims characterized in that from 0.5 to 0.7% by weight of the stabilizer composition is incorporated into the dairy dessert.

## Patentansprüche

1. Verwendung einer Stabilisatorzusammensetzung bestehend aus:

   - 10 bis 30 Gew.-% Guargummi,
   - 5 bis 20 Gew.-% Carrageenan und/oder Xanthangummi und
   - 60 bis 80 Gew.-% eines Emulgators, der ausgewählt ist aus Fettsäuremono- und -diglyceriden, Milchsäure- oder Zitronensäureestern von Fettsäuremono- und -diglyceriden, Sorbitanmono- oder -tristearat und Lecithinen, für die Herstellung eines gießfähigen belüfteten Milchdesserts in Form eines Schaums mit einer Volumenzunahme von 75 bis 150% und einer Lagerfähigkeit von mindestens drei Wochen ohne signifikantes Zusammenfallen oder Entmischen, wobei die Volumenzunahme durch die folgende Formel gegeben ist:

$$OR = \frac{W_1 - W_2}{W_2} \times 100$$

worin $W_1$ das Gewicht eines Volumens von

ungeschlagenem Dessert und $W_2$ das Gewicht desselben Volumens von geschlagenem Dessert ist.

2. Verwendung nach Anspruch 1, dadurch gekennzeichnet, daß die Stabilisatorzusammensetzung 65-70 Gew.-% Emulgator enthält.

3. Verwendung nach einem der vorhergehenden Ansprüche, dadurch gekennzeichnet, daß der Emulgator ein Milchsäureester von Fettsäuremono- und/oder -diglycerid(en) ist.

4. Verwendung nach einem der vorhergehenden Ansprüche, dadurch gekennzeichnet, daß 0,4 bis 0,8 Gew.-% Stabilisatorzusammensetzung in das Milchdessert eingeführt wird.

5. Verwendung nach einem der vorhergehenden Ansprüche, dadurch gekennzeichnet, daß 0,5 bis 0,7 Gew.-% Stabilisatorzusammensetzung in das Milchdessert eingeführt wird.

**Revendications**

1. Utilisation d'une composition stabilisante comprenant :

   - 10 à 30 % en poids de gomme de guar ;
   - 5 à 20 % en poids de carraghénine et/ou de gomme de xanthane ; et
   - 60 à 80 % en poids d'un émulsifiant choisi parmi les mono- et diglycérides d'acides gras, les esters d'acide lactique ou citrique de mono- et diglycérides d'acides gras, le mono- ou tristéarate de sorbitanne et les lécithines, pour la production d'un dessert lacté aéré pouvant être versé, sous la forme d'une mousse, ayant un degré de foisonnement de 75 à 150 % et une durée de conservation d'au moins trois semaines sans affaissement ni démixtion importants, étant entendu que le degré de foisonnement est donné par la formule suivante :

$$DF = \frac{P_1 - P_2}{P_2} \times 100$$

   dans laquelle $P_1$ est le poids d'un volume de dessert non fouetté et $P_2$ est le poids du même volume de dessert fouetté.

2. Utilisation selon la revendication 1, caractérisée en ce que la composition stabilisante comprend 65 à 70 % en poids d'émulsifiant.

3. Utilisation selon l'une quelconque des revendications précédentes, caractérisée en ce que l'émulsifiant est un ester d'acide lactique de mono- et/ou diglycéride(s) d'acides gras.

4. Utilisation selon l'une quelconque des revendications précédentes, caractérisée en ce qu'il est incorpore 0,4 à 0,8 % en poids de la composition stabilisante au dessert lacté.

5. Utilisation selon l'une quelconque des revendications précédentes, caractérisée en ce qu'il est incorporé 0,5 à 0,7 % en poids de la composition stabilisante au dessert lacté.